# EUROPÄISCHE PATENTSCHRIFT

(11) **EP 1 690 730 B1**
(45) Veröffentlichungstag und Bekanntmachung des Hinweises auf die Patenterteilung: **21.10.2009**
(21) Anmeldenummer: 06100692.0
(22) Anmeldetag: 23.01.2006
(51) Int. Cl.: B60K 31/00, B60W 30/08, B60W 30/10

(54) **Fahrerassistenzsystem mit redundanter Entscheidungseinheit**
Driver assistance system comprising redundant decision unit
Système d'assistance au conducteur avec unité de décision rdondante

(30) Priorität: 09.02.2005 DE 102005005720
(43) Veröffentlichungstag der Anmeldung: 16.08.2006
(73) Patentinhaber: ROBERT BOSCH GMBH, 70442 Stuttgart (DE)
(72) Erfinder: Lucas, Bernhard, 74354 Besigheim (DE); Heinebrodt, Martin, 70176 Stuttgart (DE); Wilhelm, Ulf, 71277 Rutesheim (DE); Haffmans, Paco, 71032 Boeblingen (DE)

(56) Entgegenhaltungen:
- DE-A1- 10 149 115
- DE-A1- 19 832 167
- US-A1- 2002 077 782

## Beschreibung

### Stand der Technik

Die Erfindung betrifft ein Fahrerassistenzsystem mit redundanter Entscheidungseinheit gemäß Anspruch 1.

Kraftfahrzeuge werden zunehmend mit Fahrerassistenzsystemen ausgerüstet, die den Fahrer bei der Führung des Fahrzeugs unterstützen und/oder ihn auf Gefahrensituationen hinweisen. Beispiele für solche Fahrerassistenzsysteme sind elektronische Einparkhilfen, elektronische Stabilitätssysteme (ESP) zur fahrdynamischen Stabilisierung des Fahrzeugs, adaptive Geschwindigkeitsregler (ACC; Adaptive Cruise Control), die in Verbindung mit einem Radarsystem die Geschwindigkeit des eigenen Fahrzeugs so regeln, daß ein vorausfahrendes Fahrzeug in einem angemessenen Sicherheitsabstand verfolgt wird, Kollisionswarnsysteme oder automatische Notbremssysteme zur Kollisionsvermeidung bzw. Milderung der Kollisionsfolgen , Spurverlassesswamsysteme, automatische Spurführungsassistenten und dergleichen.

Generell umfassen solche System eine Sensorik mit einem oder mehreren Sensoren, eine elektronische Verarbeitungseinheit zur Auswertung der Sensordaten sowie eine Ausgabeschnittstelle zur Ausgabe von Warnhinweisen an den Fahrer und/oder, im Falle von Systemen, die autonom in die Fahrzeugführung eingreifen, ein Aktorsystem mit ein oder mehreren Aktoren für den Eingriff in die Fahrzeugführung. Die Sensorik umfaßt insbesondere Sensorkomponenten zur Erfassung des Fahrzeugumfelds, beispielsweise Radar-, Laser-, Ultraschall-, Videosensoren und dergleichen.

Häufig sind im Rahmen der Fahrerassistenzfunktion Entscheidungen auf der Grundlage der von der Sensorik gelieferten Informationen zu treffen. Zum Beispiel weisen Kollisionswarnsysteme und Notbremssysteme eine Entscheidungseinheit auf, die anhand der Sensordaten entscheidet, ob eine akute Kollisionsgefahr besteht oder nicht. Entsprechend weisen Spurverlassenswarnsysteme und automatische Spurführungsassistenten eine Entscheidungseinheit auf, die entscheidet, ob das eigene Fahrzeug die befahrene Fahrbahnspur zu verlassen droht.

An die Verläßlichkeit der Entscheidungseinheit sind hohe Anforderungen zu stellen, da unnötige Fehlwarnungen vom Fahrer als störend empfunden werden und die Akzeptanz solcher Systeme beeinträchtigen. Noch wichtiger ist die Verläßlichkeit im Fall von Systemen, die autonom in die Fahrzeugführung eingreifen, da Fehlentscheidungen, etwa die unnötige Auslösung einer Notbremsung oder, im Fall eines Spurführungsassistenten, ein unnötiger Eingriff in die Fahrzeuglenkung, gravierende Folgen haben und die Fahrsicherheit beeinträchtigen können.

Passive Sicherheitssysteme wie Airbags und dergleichen, bei denen Fehlentscheidungen bzw. Fehlauslösungen ebenfalls gravierende Folgen haben können, enthalten deshalb häufig redundante Auslösepfade. In jedem Pfad wird dann vollständig unabhängig von dem jeweiligen anderen Pfad eine Auslöseentscheidung getroffen, und diese Entscheidungen werden durch ein logisches UND miteinander verknüpft, so daß eine Auslösung nur dann stattfindet, wenn die Resultate der mehreren redundaten Auslösepfade übereinstimmend für eine Auslösung sprechen.

Aus der DE 101 49 115 A1 ist ein Objekterfassungsvorrichtung für Fahrer-Assistenzsysteme in Kraftfahrzeugen bekannt, mit mindestens zwei Sensorsystemen, die Daten über den Ort und/oder Bewegungszustand von Objekten in der Umgehung des Fahrzeugs messen und deren Detektionsbereiche einander überlappen, wobei eine-Fehlererkennungseinrichtung, die die von den Sensorsystemen gemessenen Daten auf ihre Widerspruchsfreiheit prüft und bei Erkennung eines Widerspruchs ein Fehlersignal ausgibt.

Aus der DE 198 32167 A1 ist ein elektromechanisches Bremssystem, insbesondere für Kraftfahrzeuge, bekannt, mit einem Pedalmodul und zumindest zwei Bremsmodulen. Weiterhin kann ein Zentralmodul vorgesehen sein. Die Verbindung zwischen den vorgenannten Modulen kann durch einen Datenbus erfolgten. Der Datenbus ist redundant ausgeführt. In einer Ausführungsform kann das Zentralmodul Signale einer Sensorik auswerten und auf ihre Fehler hin untersuchen. Weiterhin kann das Zentralmodul einen entsprechenden Bremssollwert ausgeben, der dann an die Bremsmodule ausgegeben wird. Die Bremsmodule ermitteln daraufhin entsprechende Ansteuersignale für die Aktoren, die in eine Wirkverbindung mit den Rädern treten, um den Bremswunsch des Fahrers umzusetzen.

### Vorteile der Erfindung

Die Erfindung mit den in Anspruch 1 angegebenen Merkmalen schafft ein Fahrerassistenzsystem, bei dem die relevanten Entscheidungen mit erhöhter Verläßlichkeit getroffen werden können.

Dabei ist die Redundanz der Entscheidungseinheit auf Modulebene implementiert. Dies hat den Vorteil, daß Fehlentscheidungen auch dann vermieden werden können, wenn im Laufe des Entscheidungsprozesses in den redundanten Pfaden mehrere Fehler auftreten, die sich gegenseitig aufheben. Wenn in solchen Fällen die Entscheidungseinheit in herkömmlicher Weise redundant ausgeführt wäre, in dem Sinne, daß zwei vollständig unabhängig arbeitende Entscheidungseinheiten vorgesehen sind, deren Ergebnisse erst am Ende durch UND verknüpft werden, so könnte die Fehlerhäufung dazu führen, daß beide Entscheidungspfade ein übereinstimmendes, jedoch fehlerhaftes Ergebnis liefern. Daher wird durch den modularen Aufbau der Entscheidungseinheit der Entscheidungsprozeß in mindestens drei Schritte zerlegt, und zumindest die wichtigeren dieser Schritte sind redundant ausgeführt, wobei in diesen Schritten, d. h., in diesen Modulen, jeweils auch eine Konsistenzprüfung der Resultate stattfindet.

Diese Konsistenzprüfung ermöglicht es, Fehler in einem der redundanten Pfade mit wesentlich höherer Empfindlichkeit zu erkennen als bei einem bloßen Vergleich der Ja/Nein-Aussagen am Ende des Entscheidungsprozesses. Insbesondere wird eine Fehlentscheidung in den Fällen vermieden, in denen die Fehler in den verschiedenen redundanten Pfaden auf unterschiedlichen Stufen, d. h., in unterschiedlichen Modulen auftreten. Auch in den Fällen, in denen die Fehler in beiden Pfaden innerhalb desselben Moduls auftreten, besteht eine größere Wahrscheinlichkeit, die Fehler zu erkennen, da die von den betreffenden Teilmodulen gelieferten Zwischenresultate im allgemeinen nicht nur in einer Ja/Nein-Aussage bestehen werden, sondern detailliertere Informationen enthalten, die eine strengere Konsistenzprüfung ermöglicht. Auf diese Weise wird eine deutlich höhere Verläßlichkeit der Entscheidungseinheit erreicht.

Bei den drei Modulen der Entscheidungseinheit handelt es sich typischerweise um ein Sensormodul, ein oder mehrere Verarbeitungsmodule und ein Entscheidungsmodul. Das Sensormodul und/oder mindestens eines der Verarbeitungsmodule ist dann redundant ausgebildet und weist eine Vergleichseinrichtung zur Erkennung von Inkonsistenzen auf. Sofern am Ende einer Stufe eine Inkonsistenz festgestellt wurde, wird der Entscheidungsprozeß abgebrochen, was zu einer negativen Entscheidung des Entscheidungsmoduls äquivalent ist.

Andernfalls wird der Prozeß bis zum Entscheidungsmodul fortgesetzt, das dann seine Entscheidung auf der Grundlage konsistenzgeprüfter und somit verläßlicher Daten trifft.

Eine vorteilhafte Ausgestaltung der Erfindung ergibt sich aus dem Unteranspruch.

### Zeichnung

Ein Ausführungsbeispiel der Erfindung ist in den Zeichnungen dargestellt und in der nachfolgenden Beschreibung näher erläutert.

### Es zeigen:

Figur 1 ein Blockdiagramm einer Entscheidungseinheit eines erfindungsgemäßen Fahrerassistenzsystems;
Figur 2 eine Skizze zur Erläuterung der Arbeitsweise eines Fahrerassistenzsystems gemäß dem Ausführungsbeispiel der Erfindung;
Figur 3 eine tabellarische Darstellung eines Entscheidungsprozesses in dem Fahrerassistenzsystem nach Figur 2;
Figur 4 eine Skizze zur Erläuterung der Funktionsweise eines Fahrerassistenzsystems ; und
Figur 5 eine tabellarische Darstellung eines Entscheidungsprozesses in dem Fahrerassistenzsystem nach Figur 4.

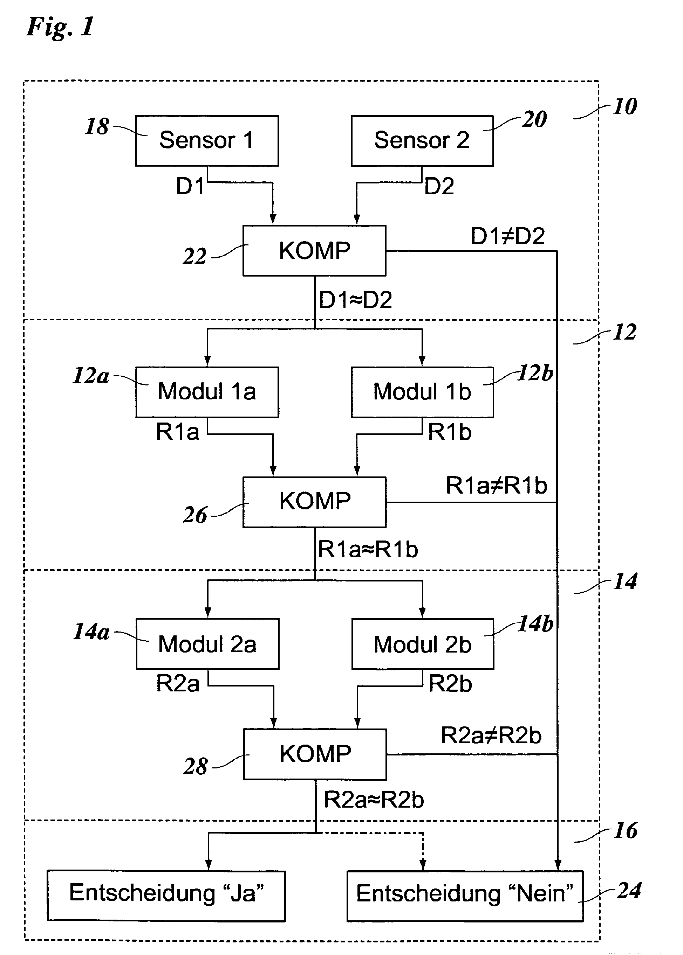

In Figur 1 ist eine Entscheidungseinheit eines Fahrerassistenzsystems als Blockdiagramm dargestellt. Dabei handelt es sich bei dem Fahrerassistenzsystem um ein Kollisionswarnsystem . Das Entscheidungssystem hat demgemäß die Entscheidung zu treffen, ob eine akute Kollisionsgefahr besteht oder nicht.

Das Entscheidungssystem ist modular aufgebaut und umfaßt ein Sensormodul 10, ein erstes Verarbeitungsmodul 12, ein zweites Verarbeitungsmodul 14 und ein Entscheidungsmodul 16.

Das Sensormodul 10 ist redundant ausgeführt und umfaßt zwei unabhängig voneinander arbeitende Sensoren 18, 20 zur Erfassung des Verkehrsumfelds. Beispielsweise kann es sich bei diesen Sensoren um zwei unterschiedliche Radarsysteme (beispielsweise ein Long-Range-Radar und ein Short-Range-Radar), um ein Radarsystem und ein Videosystem oder ein Radarsystem und ein Ultraschallsystem handeln. Die Sensoren 18, 20 liefern Daten D1 und D2, die die Ortskoordinaten und gegebenenfalls auch die Relativgeschwindigkeiten von georteten Objekten (potentiellen Hindernissen) im Vorfeld des Fahrzeugs angeben. Damit die redundant ermittelten Daten D1 und D2 miteinander vergleichbar sind, wird zu ihrer Darstellung zweckmäßig ein einheitliches Koordinatensystem verwendet.

In einer Vergleichseinrichtung 22 werden die Daten D1 mit den Daten D2 verglichen, und nur wenn diese Daten innerhalb gewisser Toleranzgrenzen übereinstimmen, wird das übereinstimmende Resultat an das erste Verarbeitungsmodul 12 übergeben. Andernfalls, also wenn die Daten D1 deutlich von den Daten D2 verschieden sind, ist anzunehmen, daß bei mindestens einem der Sensoren 18, 20 eine Fehlmessung vorliegt, so daß die Daten nicht zuverlässig sind. In diesem Fall wird der Entscheidungsprozeß abgebrochen, was im Ergebnis bedeutet, daß das Entscheidungsmodul 16 die Entscheidung trifft, daß keine Kollisionsgefahr vorliegt (Block 24).

Das erste Verarbeitungsmodul 12 ist ebenfalls redundant ausgeführt und umfaßt zwei unabhängig voneinander arbeitende Teilmodule 12a, 12b, die beispielsweise durch unterschiedliche Hardwarekomponenten und/oder unterschiedliche Software-Algorithmen gebildet werden. Wenn die Vergleichseinrichtung 22 gültige Daten D1 oder D2 (oder auch einen Mittelwert hieraus) an das Verarbeitungmodul 12 übermittelt, so führen die Teilmodule 12a und 12b an diesen Daten unabhängig voneinander Berechnungen aus, die zu vergleichbaren Resultaten R1a und R1b führen. Diese Berechnungen beziehen sich darauf, ob die Fahrbahn vor dem eigenen Fahrzeug frei ist oder, sofern Hindernisse vorhanden sind, ob zwischen diesen Hindernissen hinreichend große Lücken bestehen, so daß sie umfahren werden können. Gegebenenfalls können die Teilmodule 12a und 12b dabei auch auf Zusatzinformationen aus unterschiedlichen Quellen zugreifen, etwa zur Abschätzung der Breite der georteten Hindernisse.

Das Verarbeitungsmodul 12 enthält eine Vergleichseinrichtung 26, die die Resultate R1a und R1b miteinander vergleicht und analog zu der oben beschriebenen Vergleichseinrichtung 22 arbeitet. Falls eines der Teilmodule 12a oder 12b fehlerhaft arbeitet, wird somit durch die Vergleichseinrichtung 26 eine Fehlentscheidung verhindert.

Auch das zweite Verarbeitungsmodul 14 ist redundant ausgeführt, mit Teilmodulen 14a und 14b und einer Vergleichseinrichtung 28. Hier werden die Resultate R1a und/oder R1b weiter verarbeitet, etwa im Hinblick auf Abstände und Relativgeschwindigkeiten der georteten Objekte, um festzustellen, ob, sofern keine Umfahrungsmöglichkeit besteht, das eigene Fahrzeug noch rechtzeitig vor den Hindernissen zum Stillstand gebracht werden kann. Die unabhängig voneinander gewonnenen Resultate R2a und R2b können dann bereits die Form einer Ja/Nein-Aussage haben, die über das Vorhandensein oder Nichtvorhandensein einer akuten Kollisonsgefahr entscheidet. Die Vergleichseinrichtung 28 vergleicht diese Resultate, und wenn beide Resultate übereinstimmend "Ja" sind, veranlaßt die Vergleichseinrichtung 28 das Entscheidungsmodul 16 zur Ausgabe der Entscheidung "Ja", d. h., zur Ausgabe einer Kollisionswarnung an den Fahrer. In diesem Fall könnte das zweite Verarbeitungsmodul 14 auch als Teil des Entscheidungsmoduls 16 betrachtet werden.

Es ist jedoch auch eine modifizierte Ausführungsform denkbar, bei der die Resultate R2a und R2b quantitative Zwischenresultate sind und beispielsweise die Differenz zwischen dem kleinsten Abstand zum Hindernis und dem voraussichtlichen Anhalteweg des eigenen Fahrzeugs angeben. In diesem Fall ist die Funktion des Verarbeitungsmoduls 14 analog zu der des Verarbeitungsmoduls 12, und die Vergleichseinrichtung 28 gibt ein mehrwertiges Signal an das Entscheidungsmodul 16 aus, das in diesem Fall als echtes Entscheidungsmodul, etwa durch Vergleich des mehrwertigen Signals mit einem Schwellenwert, entscheidet, ob eine Kollisionsgefahr besteht oder nicht. Das Entscheidungsmodul 16, das nur einen relativ einfachen Verarbeitungsschritt auszuführen hat, ist in diesem Fall nicht redundant ausgebildet.

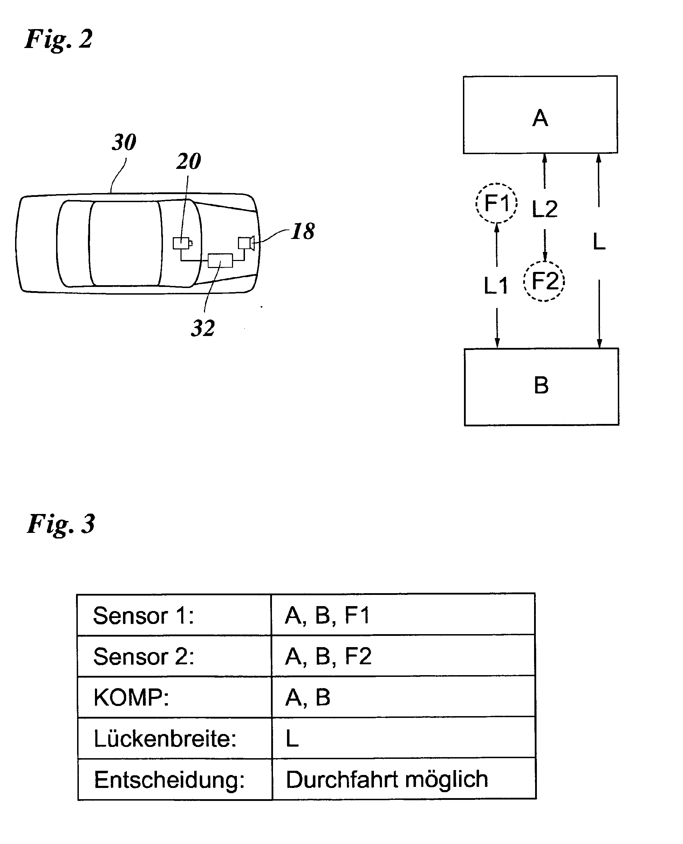

Die Wirkungsweise der oben beschriebenen Entscheidungseinheit wird nachstehend mit Bezug auf Figuren 2 und 3 anhand eines Beispiels erläutert.

Figur 2 zeigt ein Fahrzeug 30, das mit einem Fahrerassistenzsystem 32, nämlich einem Kollisionswarnsystem ausgerüstet ist. Dieses Kollisionswarnsystem enthält eine Entscheidungseinheit gemäß Figur 1. Als Sensoren 18 und 20 sind ein Radarsensor und ein Videosensor vorgesehen. Das Fahrzeug 30 nähert sich beispielsweise einer Unfallstelle, an der sich zwei ruhende Hindernisse A und B auf der Fahrbahn befmden. Beide Hindernisse werden sowohl vom Radarsensor als auch vom Videosensor geortet.

Aufgrund eines internen Fehlers oder einer externen Störung ortet der Radarsensor 18 außerdem ein Scheinhindernis F1, das in Wahrheit nicht vorhanden ist. Als Beispiel kann angenommen werden, daß es sich bei dem Scheinhindernis F1 um ein kleines auf der Straße liegendes Blechteil handelt, das gefahrlos überfahren werden kann, das jedoch durch den Radarsensor nicht von einem größeren Hindernis, etwa einem stehenden Fahrzeug, unterschieden werden kann.

Der Videosensor 20 ortet fälschlich ein Scheinhindernis F2. Eine Ursache für diese Fehlortung könnte z. B. darin bestehen, daß sich in Wahrheit ein dem Scheinhindernis F2 entsprechendes weiteres Fahrzeug in relativ großem Abstand hinter der Unfallstelle befindet und daß die Entfernung dieses Fahrzeugs mit dem Videosystem, das nur eine relativ ungenaue und fehleranfällige Entfernungsbestimmung erlaubt, falsch eingeschätzt wird, so daß das Scheinhindernis F2 zwischen den Hindernissen A und B zu liegen scheint.

In Figur 3 sind in der ersten und zweiten Zeile die von den jeweiligen Sensoren 18, 20 (Sensor 1 und Sensor 2) georteten Hindernisse und Scheinhindernisse aufgelistet. Wäre die Entscheidungseinheit abweichend von Figur 1 so aufgebaut, daß die Daten der beiden Sensoren durchgängig in parallelen, redundanten Zweigen verarbeitet werden, also die Daten D1 unmittelbar, ohne Zwischenschaltung der Vergleichseinrichtung 22, vom Teilmodul 12a verarbeitet würden und entsprechend die Daten D2 unmittelbar vom Teilmodul 12b, so würde man als Resultat R1a eine Lückenbreite L1 erhalten, die die Breite der Lücke zwischen dem Hindernis B und dem Scheinobjekt F1 angibt. Diese Lücke ist so klein, daß sie vom dem Fahrzeug 30 nicht durchfahren werden kann. Entsprechend erhielte man als Resultat R1b eine Lückenbreite L2, die die Breite einer Lücke zwischen dem Hindernis A und dem Scheinhindernis F2 angibt. Auch diese Lücke könnte nicht durchfahren werden. Wenn diese Resultate einfach logisch durch UND verknüpft würden, erhielte man also als Ergebnis die Entscheidung, daß eine Umfahrung des Hindernisses bzw. ein Durchfahren der Lücke zwischen A und B nicht möglich ist und es würde (fälschlich) eine Kollisionswarnung ausgegeben.

Bei der Entscheidungseinheit nach Figur 1 erkennt jedoch die Vergleichseinrichtung 22, daß das vom Radarsensor geortete Scheinobjekt F1 nicht durch den Videosensor verifiziert wird und umgekehrt das Scheinobjekt F2 nicht durch den Radarsensor verifiziert wird. Die Daten D1 und D2 sind deshalb nicht konsistent, soweit sie sich auf die Scheinhindernisse F1 und F2 beziehen. Da jedoch außerdem konsistente Ortungsdaten für die Hindernisse A und B vorhanden sind, führt dies in vorliegenden Fall nicht zum Abbruch der Entscheidungsprozedur, sondern lediglich dazu, daß die Ortungsdaten für die Scheinhindernisse F1 und F2 eliminiert und nicht weiter berücksichtigt werden (dritte Zeile in Figur 3).

Die Teilmodule 12a und 12b berechnen deshalb aufgrund der Ortungsdaten für die echten Hindernisse A und B jeweils annähernd dieselbe Lückenbreite L zwischen den Hindernissen A und B und stellen fest, daß diese Lücke so breit ist, daß sie von dem Fahrzeug 30 durchfahren werden kann. Somit wird trotz der fälschlichen Ortung der Scheinhindernisse F1 und F2 entschieden, daß keine Kollisionsgefahr besteht, und es wird keine unnötige Kollisionswarnung ausgegeben (letzte Zeile in Figur 3).

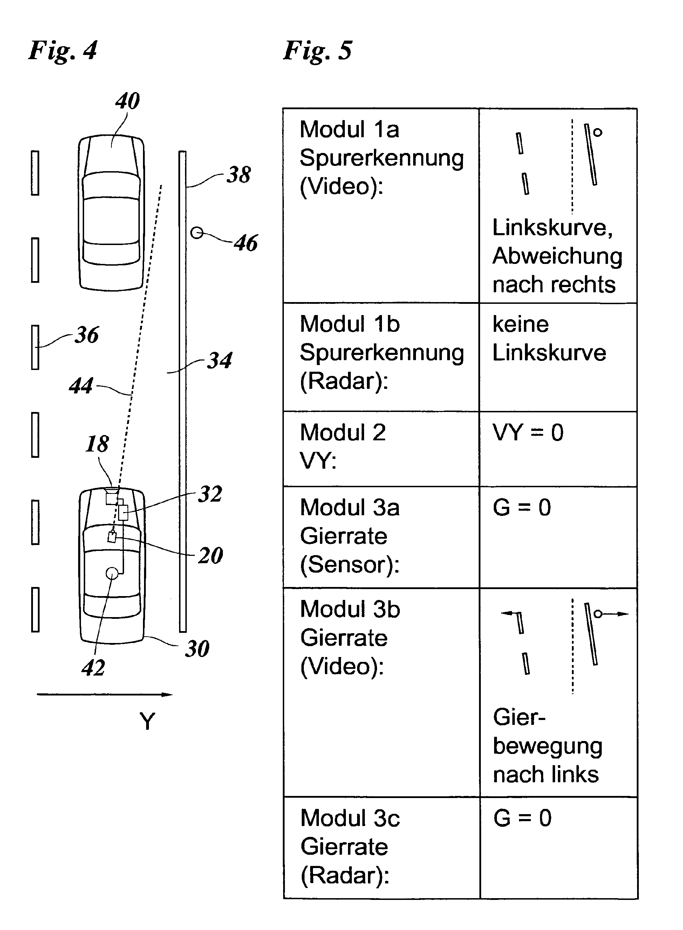

Ein modifiziertes Beispiel ist in Figuren 4 und 5 dargestellt. Das Fahrerassistenzsystem 32 des Fahrzeugs 30 weist in diesem Fall einen Spurassistenten auf, der durch Eingriff in das Lenksystem des Fahrzeugs automatisch dafür sorgt, daß das Fahrzeug etwa auf der Mitte der von ihm befahrenen Fahrspur 34 bleibt, die in Figur 4 durch Fahrbahnmarkierungen 36 und 38 begrenzt ist. Diese Fahrbahnmarkierungen werden vom Videosensor 20 erkannt. Der Radarsensor 18 ortet und verfolgt ein vorausfahrendes Fahrzeug 40.

Für das Fahrzeug 30 ist außerdem ein Gierratensensor 42 eingezeichnet, der die Gierrate dieses Fahrzeugs mißt.

Eine Entscheidungseinheit im Fahrerassistenzsystem 32 hat in diesem Fall die Aufgabe, anhand der Daten der verschiedenen Sensoren zu entscheiden, ob das Fahrzeug 30 im Begriff ist, die eigene Fahrspur zu verlassen. Diese Entscheidung erfolgt in drei Schritten. In einem ersten Verarbeitungsmodul wird die Lage und der Verlauf der Fahrspur 34 relativ zum eigenen Fahrzeug 30 bestimmt. Im zweiten Schritt wird die Quergeschwindigkeit VY des Fahrzeugs 30 relativ zur Fahrbahn bestimmt, also die Geschwindigkeit quer zur Längsrichtung der Fahrbahn 34, um zu entscheiden, ob und in welchem Ausmaß sich das Fahrzeug der rechten oder linken Fahrbahnmarkierung annähert. In einem dritten Verarbeitungsmodul wird die Gierrate des Fahrzeugs 30 bestimmt, um zu entscheiden, ob der Fahrer bereits selbst korrigierend in die Lenkung eingegriffen hat, um das Fahrzeug annäähernd auf der Spurmitte zu halten.

Wie in Figur 5 tabellarisch dargestellt ist, umfaßt das erste Verarbeitungsmodul zwei Teilmodule "Modul 1a" und "Modul 1b" für eine redundante Spurerkennung einerseits anhand der Daten des Videosensors 20 und andererseits anhand der Daten des Radarsensors 18.

In Figur 4 ist als Beispiel angenommen, daß der Videosensor 20 fehljustiert ist, so daß seine optische Achse 44 von der Längsrichtung des Fahrzeugs 30 abweicht. Das entsprechende Videobild ist in Figur 5 in der ersten Zeile in der rechten Spalte dargestellt. Dieses Bild wird so interpretiert, daß die Fahrbahn 34 in bezug auf die optische Achse 44 schräg nach links verläuft, also das Fahrzeug in eine Linkskurve einfährt. Da außerdem die optische Achse 44 mit der Längsmittelachse des Fahrzeugs 30 identifiziert wird, erhält man auch das falsche Resultat, das sich das Fahrzeug 30 nicht auf der Fahrbahnmitte, sondern in der Nähe der rechten Fahrbahnmarkierung 38 befindet.

Im Teilmodul 1b (zweite Spalte in Figur 5) werden die Radardaten des vorausfahrenden Fahrzeugs 40 ausgewertet. Diese Auswertung ergibt, daß das vorausfahrende Fahrzeug 40 sich über einen längeren Zeitraum relativ genau in Geradeaus-Richtung des Fahrzeugs 30 befindet. Daraus läßt sich schließen, daß die Fahrbahn 34 geradlinig verläuft und jedenfalls keine Linkskurve aufweist. Eine dem ersten Verarbeitungsmodul zugeordnete Vergleichseinrichtung erkennt somit, daß die Resultate der Teilmodule 1a und 1b einander widersprechen. Schon hieraus läßt sich schließen, daß ein Fehler bei der Spurerkennung vorliegt und die Resultate des ersten Verarbeitungsmoduls somit keine verläßliche Grundlage für eine Spurverlassenswarnung oder einen automatischen Lenkeingriff bilden. Die Redundanz des ersten Verarbeitungsmoduls setzt hier allerdings voraus, daß ein vorausfahrendes Fahrzeug 40 vorhanden ist.

Das zweite Verarbeitungsmodul "Modul 2" (dritte Zeile in Figur 5) ist hier nicht redundant ausgebildet, da die Giergeschwindigkeit des Fahrzeugs (in bezug auf die Fahrbahn) nur anhand des Videosystems erkannt werden kann. Trotz der Fehljustierung des Videosensors 20 ehält man hier das (richtige) Resultat, daß die Quergeschwindigkeit VY des Fahrzeugs 30 gleich null ist, da der Abstand der optischen Achse 44 zu den Fahrbahnmarkierungen 36 38 zeilich konstant bleibt.

Das dritte Verarbeitungsmodul zur Bestimmung der Gierrate weist in diesem Beispiel drei redundante Teilmodule "Modul 3a", "Modul 3b" und "Modul 3c" auf (dritte bis sechste Zeile in Figur 5). Das Teilmodul 3a bestimmt die Gierrate unmittelbar anhand des Signals des Gierratensensors 42 und liefert im gezeigten Beispiel das Resultat, daß die Gierrate gleich null ist. Das Teilmodul 3b bestimmt die Gierrate anhand der Daten des Videosensors 20. Dies ist möglich, weil sich bei einer Gierbewegung des Fahrzeugs 30, beispielsweise nach links, alle ruhenden Objekte, etwa die Fahrbahnmarkierungen 36, 38 sowie ein Objekt 46 am Fahrbahnrand, im Videobild scheinbar nach rechts bewegen. Dieser Bewegung ist allerdings eine Bewegungskomponente überlagert, die aus der Fortbewegung des Fahrzeugs 30 resultiert und dazu führt, daß sich Objekte in der rechten Bildhälfte scheinbar nach rechts und Objekte in der linken Bildhälfte scheinbar nach links bewegen. Dennoch ist die Gierbewegung daran zu erkennen, daß eine der beiden Bewegungsrichtungen dominiert. Im gezeigten Beispiel wird durch die Fehljustierung des Videosensors 20 eine dominierende Bewegung nach rechts vorgetäuscht (fünfte Zeile in Figur 5), was fälschlich als eine Gierbewegung des Fahrzeugs nach links interpretiert wird.

Im dritten Teilmodul 3c wird auf analoge Weise die Gierrate anhand der kollektiven Ortungs-Winkeldaten der vom Radarsensor 18 georteten Objekte bestimmt. Da im gezeigten Beispiel das vorausfahrende Fahrzeug 44 stets in derselben Richtung geortet wird, erhält man als Ergebnis die Gierrate null. Die Resultate der Teilmodule 3a und 3c widersprechen somit dem Resultat des Teilmoduls 3b, und auch anhand dieser Inkonsistenz ist eine Fehlfunktion eines der drei Teilmodule des dritten Verarbeitungsmoduls zu erkennen, so daß eine Fehlreaktion des Spurassistenten vermieden werden kann. Der Widerspruch zwischen den Resultaten der Teilmodule 3a und 3b bliebe selbst dann bestehen, wenn das vorausfahrenden Fahrzeug 44 nicht vorhanden wäre.

In dem in Figuren 4 und 5 dargestellten Beispiel ermöglicht es die Redundanz der Entscheidungseinheit auf Modulebene, einen Systemfehler, im gezeigten Beispiel eine Fehljustierung des Videosensors 20, zu erkennen. Natürlich läßt sich diese Information auch dazu nutzen, eine Fehlermeldung auszugeben und den Fahrer zu einem Werkstattbesuch zu veranlassen.

Auf analoge Weise könnten mit dem in Figur 5 gezeigten Aufbau der Entscheidungseinheit auch Fehlentscheidungen vermieden werden, die auf anderen Fehlerquellen beruhen, beispielsweise auf einer Fehlinterpretation eines unklaren Videobildes, auf Meßfehlern des Gierratensensors 42 und dergleichen.

Die Erfindung wurde oben am Beispiel einer Kollisionswarnfunktion erläutert, ist jedoch auch bei Entscheidungseinheiten anwendbar, die andere Funktionen haben, z. B. einen automatischen Eingriff in die Lenkung, eine automatische Betätigung des Gaspedals und dergleichen.

## Patentansprüche

1. Fahrerassistenzsystem mit redundanter Entscheidungseinheit, wobei die Entscheidungseinheit mindestens drei logisch auf einander aufbauende Module (10, 12, 14, 16) aufweist, von denen mindestens eines (10, 12) mehrere redundante Teilmodule (18, 20; 12a, 12b) sowie eine Vergleichseinrichtung (22, 26) aufweist, die die Resultate der Teilmodule vor ihrer Weitergabe an ein Nachfolgemodul (12, 14) auf Konsistenz prüft, indem die der Vergleichseinrichtung (22, 26) zugeführten Resultate (D1, D2; R1a, R1b) der Teilmodule quantitative Größen sind, die in der Vergleichseinrichtung auf Übereinstimmung geprüft werden, wobei eines der Module (10) ein Sensormodul mit unabhängig voneinander arbeitenden Sensoren (18, 20) als redundanten Teilmodulen ist und in einer ersten Vergleichseinrichtung (22) die von den Sensoren (18,20) gelieferten Daten (D1, D2), die die Ortskoordinaten von georteten Objekten im Vorfeld des Fahrzeugs angeben, verglichen werden und bei Übereinstimmung der Daten innerhalb gewisser Toleranzgrenzen das übereinstimmende Resultat an ein erstes Verarbeitungsmodul (12) übergeben werden, das erste Verarbeitungsmodul (12) ebenfalls redundant ausgeführt ist und zwei unabhängig voneinander arbeitende Teilmodule (12a, 12b) umfasst, in denen berechnet wird, ob die Fahrbahn vor dem eigenen Fahrzeug frei ist oder, sofern Hindernisse vorhanden sind, ob zwischen diesen Hindernissen hinreichend große Lücken bestehen, so dass sie umfahren werden können und in einer weiteren Vergleichseinrichtung (26) des Verarbeitungsmoduls (12) die Resultate (R1a, R1b) der zwei unabhängig voneinander arbeitende Teilmodule (12a, 12b) miteinander verglichen werden, **dadurch gekennzeichnet, dass** ein zweites Verarbeitungsmodul (14) mit redundanten Teilmodulen (14a, 14b) und einer dritten Vergleichseinrichtung (28) vorgesehen ist, wobei in den redundanten Teilmodulen (14a, 14b) des zweiten Verarbeitungsmoduls (14) die Resultate (R1a, R1b) des ersten Verarbeitungsmoduls (12) weiter verarbeitet werden um festzustellen, ob, sofern im ersten Verarbeitungsmodul (12) keine Umfahrungsmöglichkeit festgestellt wurde, das eigene Fahrzeug noch rechtzeitig vor den Hindernissen zum Stillstand gebracht werden kann und die Resultate (R2a, R2b) des zweiten Verarbeitungsmoduls in der dritten Vergleichseinrichtung (28) verglichen werden, und bei übereinstimmender Resultate (R2a, R2b) dass eine Kollisionsgefahr ("Ja") besteht, eine Kollisionswarnung an den Fahrer ausgegeben wird.

2. Fahrerassistenzsystem nach Anspruch 1, **dadurch gekennzeichnet, daß** es eine automatische Bremsfunktion aufweist und daß die Entscheidungseinheit dazu ausgebildet ist, zu entscheiden, ob eine akute Kollisionsgefahr besteht.

## Claims

1. Driver assistance system comprising a redundant decision unit, wherein the decision unit has at least three modules (10, 12, 14, 16) logically based one on the other, at least one (10, 12) of which has a plurality of redundant submodules (18, 20; 12a, 12b) and a comparator device (22, 26) which checks the results of the submodules for consistency before they are passed on to a following module (12, 14) by virtue of the fact that the results (D1, D2; R1a, R1b), which are supplied to the comparator device (22, 26), of the submodules are quantitive variables which are checked for correspondence in the comparator device, wherein one of the modules (10) is a sensor module with sensors (18, 20) which operate independently of one another as redundant submodules, and in a first comparator device (22) the data (D1, D2) which are supplied by the sensors (18, 20) and which give the location coordinates of located objects in the area in front of the vehicle are compared, and when the data correspond within certain tolerance limits the corresponding result is transferred to a first processing module (12), the first processing module (12) is also of redundant design and comprises two submodules (12a, 12b) which operate independently of one another and in which it is calculated whether the carriageway in front of the driver's own vehicle is free or, if obstacles are present, whether there are sufficiently large gaps between these obstacles for them to be avoided, and in a further comparator device (26) of the processing module (12) the results (R1a, R1b) of the two submodules (12a, 12b) which operate independently of one another are compared with one another,
**characterized in that** a second processing module (14) is provided with redundant submodules (14a, 14b) and a third comparator device (28), wherein the results (R1a, R1b) of the first processing module (12) are processed further in the redundant submodules (14a, 14b) of the second processing module (14) in order to determine whether, assuming that the possibility of avoidance was not detected in the first processing module (12), the driver's own vehicle can still be brought to a standstill in good time before the obstacles, and the results (R2a, R2b) of the second processing module are compared in the third comparator device (28), and if the results (R2a, R2b) correspond in indicating a risk of collision ("Yes"), a collision warning is output to the driver.

2. Driver assistance system according to Claim 1,
**characterized in that** said system has an automatic braking function, and **in that** the decision unit is designed to decide whether there is a severe risk of collision.

## Revendications

1. Système d'assistance au conducteur doté :
d'une unité redondante de décision, l'unité de décision présentant au moins trois modules logiques (10, 12, 14, 16) montés les uns sur les autres et parmi lesquels au moins un (10, 12) présente plusieurs parties redondantes de module (18, 20; 12a, 12b),
ainsi que d'un dispositif comparateur (22, 26) qui vérifie la consistance des résultats des parties de module avant de les transmettre à un module suivant (12, 14), les résultats (D1, D2; R1a, R1b) des parties de module apportés au dispositif comparateur (22, 26) étant des grandeurs quantitatives dont l'accord mutuel est vérifié dans le dispositif comparateur,
l'un (10) des modules étant un module de détection qui présente des détecteurs (18, 20) qui travaillent indépendamment l'un de l'autre et qui forment les parties redondantes de module,
les données (D1, D2) délivrées par les détecteurs (18, 20) et qui indiquent les coordonnées de localisation d'objets localisés dans le champ situé à l'avant du véhicule étant comparées dans un premier module comparateur (22) et
lorsque les données sont en accord mutuel à l'intérieur de certaines limites de tolérance, les résultats en accord mutuel sont transmis à un premier module de traitement (12),
le premier module de traitement (12) étant également redondant et comprenant deux parties de module (12a, 12b) qui travaillent indépendamment l'une de l'autre et dans lesquelles on calcule si la bande de circulation située à l'avant du véhicule propre est libre ou, si des obstacles y sont présents, s'il existe entre ces obstacles des distances suffisamment grandes pour qu'ils puissent être contournés,
les résultats (R1a, R1b) des deux parties de module (12a, 12b) qui travaillent indépendamment l'une de l'autre étant comparés les uns aux autres dans un autre dispositif comparateur (26) du module de traitement (12),
**caractérisé en ce que**
un deuxième module de traitement (14) doté de parties redondantes de module (14a, 14b) et d'un troisième dispositif comparateur (28) est prévu,
**en ce que** les résultats (R1a, R1b) du premier module comparateur (12) sont encore traités dans les parties redondantes (14a, 14b) du deuxième module de traitement (14) pour vérifier si, au cas où aucune possibilité de contournement n'a été constatée dans le premier module de traitement (12), le véhicule propre peut encore être amené à l'arrêt en temps utile avant les obstacles,
**en ce que** les résultats (R2a, R2b) du deuxième module comparateur sont comparés dans le troisième module comparateur (28) et
**en ce qu'**au cas où les résultats (R2a, R2b) indiquent en accord mutuel qu'il existe un risque de collision ("oui"), un avertissement de collision est délivré au conducteur.

2. Système d'assistance au conducteur selon la revendication 1, **caractérisé en ce qu'**il présente une fonction de freinage automatique et **en ce que** l'unité de décision est configurée pour décider s'il existe un risque aigu de collision.
